# EUROPEAN PATENT APPLICATION

(11) **EP 4 510 371 A1**
(43) Date of publication of application: **19.02.2025**
(21) Application number: 22953636.2
(22) Date of filing: 05.08.2022
(51) Int. Cl.: H01M 50/593, H01M 50/528, H01M 10/0525

(54) **BATTERY CELL, BATTERY, AND ELECTRICAL APPARATUS**

(71) Applicant: Contemporary Amperex Technology (Hong Kong) Limited, Central, Central And Western District (HK)
(72) Inventor: QIAN, Ou, Ningde, Fujian 352100 (CN); CHEN, Shengwang, Ningde, Fujian 352100 (CN); GUO, Zhijun, Ningde, Fujian 352100 (CN)
(74) Representative: Ziebig Hengelhaupt Intellectual Property Attorneys Patentanwaltskanzlei PartGmbB
(86) International application number: PCT/CN2022/110547
(87) International publication number: WO 2024/026829

(57) **Abstract**

Disclosed are a battery cell (20), a battery (100), and an electric apparatus. The battery cell (20) includes: a housing (21) having an opening (211); and an end cover assembly (23) for closing the opening (211), where the end cover assembly (23) includes an electrode terminal (232). An electrode assembly (22), an adapter (24), and an insulating member (25) are also disposed in the housing (21). The electrode assembly (22) includes an electrode tab (221), the adapter (24) is configured to electrically connect the electrode tab (221) and the electrode terminal (232), and the insulating member (25) is configured to insulate the adapter (24) from the housing (21). The battery cell (20), the battery (100), and the electric apparatus provided in this application can mitigate the thermal failure of the battery cell (20) caused by thermal diffusion during the use of the battery cell (20), thereby improving the safety performance of the battery cell (20) and the battery (100) to which the battery cell (20) is applied.

## Description

### TECHNICAL FIELD

This application relates to the field of batteries, and in particular to a battery cell, a battery, and an electric apparatus.

### BACKGROUND

Energy saving and emission reduction are crucial to the sustainable development of the automobile industry. Electric vehicles, with their advantages in energy conservation and environmental protection, have become an important part of the sustainable development of the automobile industry. Battery technology is an important factor in connection with the development of electric vehicles.

Existing batteries have a risk of electrical contact between an adapter used to electrically connect an electrode tab and an electrode terminal and a housing during thermal diffusion of the battery cell, leading to a thermal failure of the battery cell and reducing the safety performance of the battery cell and the battery to which the battery cell is applied.

### SUMMARY

In view of the foregoing problem, this application provides a battery cell, a battery, and an electric apparatus, which can mitigate the thermal failure of the battery cell caused by thermal diffusion during the use of the battery cell, thereby improving the safety performance of the battery cell and the battery to which the battery cell is applied.

According to a first aspect, this application provides a battery cell, including: a housing having an opening; an electrode assembly disposed in the housing, where the electrode assembly includes an electrode tab; an end cover assembly closing the opening, where the end cover assembly includes an electrode terminal; an adapter disposed in the housing and configured to electrically connect the electrode tab and the electrode terminal; and an insulating member disposed in the housing, where the insulating member is configured to insulate the adapter from the housing.

In the technical solution of the embodiments of this application, the battery cell includes the housing, the electrode assembly, the end cover assembly, the adapter, and the insulating member. The electrode assembly is disposed in the housing, and the end cover assembly can close the opening of the housing. The adapter is configured to electrically connect the electrode tab of the electrode assembly to the electrode terminal. Because the insulating member is disposed in the housing and is configured to insulate the adapter from the housing, when thermal runaway occurs in the battery and causes the electrode assembly in the battery cell to swell and deform, even if the adapter moves towards the side on which the housing is located, the insulating member can prevent the adapter from electrically contacting the housing, thereby effectively improving the safety performance of the battery cell and the battery to which the battery cell is applied.

In some embodiments, the housing is provided with the opening in a first direction, two ends of the electrode assembly in a second direction are each provided with the electrode tab, a width size of the insulating member is less than a width size of the adapter in a third direction, and the first direction, the second direction, and third direction mutually intersect each other.

According to the battery cell provided in the embodiments of this application, the width size of the insulating member is less than the width size of the adapter along the third direction, avoiding interference with other insulating film layers during assembly after the insulating member is mounted between the adapter and the housing.

In some embodiments, a spacing T is present between an orthographic projection of the insulating member on the adapter and an edge of the adapter in the third direction, and the spacing T is in a range of 0.5 mm-1 mm.

According to the battery cell provided in the embodiments of this application, the spacing T is present between the orthographic projection of the insulating member on the adapter and the edge of the adapter in the third direction, where the spacing T is any value in the range of 0.5 mm-1 mm. This can ensure the insulation demand between the adapter and the housing when thermal diffusion occurs in the battery cell, and can also avoid interference when the electrode assembly is coated with another insulating film layer.

In some embodiments, a thickness of the insulating member is less than or equal to 0.5 mm.

According to the battery cell provided in the embodiments of this application, the thickness of the insulating member is less than or equal to 0.5 mm. This, on the basis of ensuring the insulation requirement of the battery cell, can reduce the space occupied by the insulating member and increase the energy density of the battery cell.

In some embodiments, the adapter has a first end portion and a second end portion opposite each other, the first end portion is connected to the electrode terminal, the second end portion extends beyond the electrode tab in a direction back away from the end cover assembly, and along the second direction, the insulating member covers the second end portion.

When thermal diffusion occurs in the battery cell, the electrode assembly swells and deforms, leading to an increase in volume. Because a side on which the second end portion of the adapter is located cooperates with the electrode tab, and a side on which the first end portion of the insulating member is located is connected to the electrode terminal, when the electrode assembly swells and deforms, it causes the portion connected to the adapter to deform. That is, the second end portion first warps towards a side on which the housing is located. According to the battery cell provided in the embodiments of this application, the insulating member covers the second end portion, so that when thermal diffusion occurs in the battery cell, the insulating member can insulate the second end portion from the housing, thereby ensuring the safety performance of the battery cell.

In some embodiments, the insulating member is stacked with the electrode tab and is connected to the electrode tab and the second end portion.

In some embodiments, along the second direction, the second end portion bends towards a side on which a side wall of the housing is located to form a step surface, and the step surface is used for supporting the insulating member.

In some embodiments, the insulating member is connected to the housing.

In some embodiments, the battery cell further includes a protective film, the protective film is configured to insulate the electrode assembly from the housing, and the insulating member is disposed between the protective film and the housing and is connected to one of the protective film and the housing.

In some embodiments, the insulating member is connected to a surface of the protective film back away from the adapter.

In some embodiments, the protective film includes a bottom surface, a first side wall surface, and a second side wall surface that mutually intersect each other, an area of the first side wall surface is greater than an area of the second side wall surface, the second side wall surface faces the electrode tab and the adapter, and the insulating member is disposed on the second side wall and matches the second side wall in shape.

In some embodiments, a melting point of the insulating member is greater than or equal to a melting point of the protective film.

In some embodiments, strength of the insulating member is greater than or equal to strength of the protective film.

In some embodiments, the insulating member is adhered to one of the protective film and the housing.

According to a second aspect, this application provides a battery including the foregoing battery cell.

According to a third aspect, this application provides an electric apparatus including the foregoing battery.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

A person of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same components. In the accompanying drawings:
FIG. 1 is a schematic structural diagram of a vehicle according to an embodiment of this application;
FIG. 2 is a schematic structural diagram of a battery according to an embodiment of this application;
FIG. 3 is a schematic structural exploded view of a battery cell according to an embodiment of this application;
FIG. 4 is a side view of a partial structure of a battery cell according to an embodiment of this application;
FIG. 5 is a partial cross-sectional view of a battery cell according to an embodiment of this application;
FIG. 6 is an enlarged view of position A in FIG. 5;
FIG. 7 is a partial cross-sectional view of a battery cell according to another embodiment of this application;
FIG. 8 is an enlarged view of position B in FIG. 7;
FIG. 9 is a schematic diagram of cooperation between an insulating member and a housing according to an embodiment of this application;
FIG. 10 is a schematic structural exploded view of a battery cell according to still another embodiment of this application;
FIG. 11 is a partial cross-sectional view of a battery cell according to still another embodiment of this application;
FIG. 12 is an enlarged view of position C in FIG. 11;
FIG. 13 is a view of a protective film in an open state according to an embodiment of this application; and
FIG. 14 is a view of a protective film in a folded state according to an embodiment of this application.

Reference signs in specific embodiments are described as follows:
1000. vehicle;
100. battery; 200. controller; 300. motor;
10. box; 11. first portion; 12. second portion; 13. accommodating space;
20. battery cell;
21. housing; 211. opening;
22. electrode assembly; 221. electrode tab;
23. end cover assembly; 231. end cover; 232. electrode terminal;
24. adapter; 241. first connecting piece; 242. second connecting piece; 24a. first end portion; 24b. second end portion; 2421. first surface; 2422. second surface; 2423. transition surface;
25. insulating member;
26. protective film; 261. first side wall surface; 262. second side wall surface; 263. bottom wall;
X. first direction; Y second direction; and Z. third direction.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

It should be noted that, unless otherwise stated, the technical terms or scientific terms used in the embodiments of this application should be in the ordinary meaning as understood by persons skilled in the field to which the embodiments of this application belong.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In addition, the technical terms "first", "second", and the like are merely for the purpose of description, and shall not be understood as any indication or implication of relative importance or any implicit indication of the number of technical features indicated. In the descriptions of the embodiments of this application, "multiple" means more than two, unless otherwise specifically defined.

In the description of the embodiments of this application, unless otherwise specified and defined explicitly, the terms "mounting", "connection", "joining", and "fastening" should be understood in their general senses. For example, they may be a fixed connection, a detachable connection, or an integral connection, may be a mechanical connection or electrical connection, or may be a direct connection, an indirect connection via an intermediate medium, or communication between two elements or an interaction between two elements. Persons of ordinary skill in the art can understand specific meanings of these terms in the embodiments of this application as suitable to specific situations.

In the descriptions of the embodiments of this application, unless otherwise specified and defined explicitly, that a first feature is "above" or "below" a second feature may mean that the first and second features are in direct contact or that the first and second features are in indirect contact via an intermediate medium. Moreover, that the first feature is "above", "over", and "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from the perspective of market development, the application of traction batteries is becoming more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charge or discharge of the battery cell.

The battery cell includes a housing, an electrode assembly, a top cover assembly, and an adapter. The adapter is configured to electrically connect the electrode tab of the electrode assembly to the electrode terminal on the end cover assembly.

The inventors have noticed that when thermal diffusion occurs in the battery cell, the high temperature causes the original insulating structure in the battery cell to melt and fail, and the entire electrode assembly swells and moves towards the inner wall surface of the housing. This causes the adapter used to electrically connect the electrode tab of the battery cell and the electrode terminal on the end cover assembly to overlap the housing and form a loop, thus leading to an external short circuit of the electrode assembly and a thermal failure of the battery cell, and posing a safety hazard to the battery cell and the battery to which the battery cell is applied.

To mitigate the problem of thermal failure in the battery cell, the applicant has found that, even if thermal diffusion occurs in the battery cell and causes the existing insulating structure in the battery cell to melt and fail, an insulating member can be added additionally to insulate and protect both, preventing the adapter from overlapping the housing and forming a loop.

Based on the above considerations, to resolve the problem of thermal failure in the battery cell, the inventors have conducted in-depth research and designed a battery cell. The battery cell includes a housing, an electrode assembly, an end cover assembly, an adapter, and an insulating member. The housing has an opening. The electrode assembly is disposed in the housing, where the electrode assembly includes an electrode tab. The end cover assembly closes the opening, where the end cover assembly includes an electrode terminal. The adapter is disposed in the housing and configured to electrically connect the electrode tab and the electrode terminal. The insulating member is disposed in the housing, where the insulating member is configured to insulate the adapter from the housing.

In this battery cell, because the insulating member is disposed in the housing and is configured to insulate the adapter from the housing, when thermal runaway occurs in the battery and causes the electrode assembly in the battery cell to swell and deform, even if the adapter moves towards the side on which the housing is located, the insulating member can prevent the adapter from electrically contacting the housing, thereby effectively improving the safety performance of the battery cell and the battery to which the battery cell is applied.

The technical solution described in the embodiments of this application is applicable to batteries and electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

It should be understood that the technical solutions described in the embodiments of this application are not only applicable to the battery and electric apparatus described above, but also applicable to all batteries including a box and electric apparatuses using batteries. However, for the brevity of description, in the following embodiments, an electric vehicle is used as an example for description.

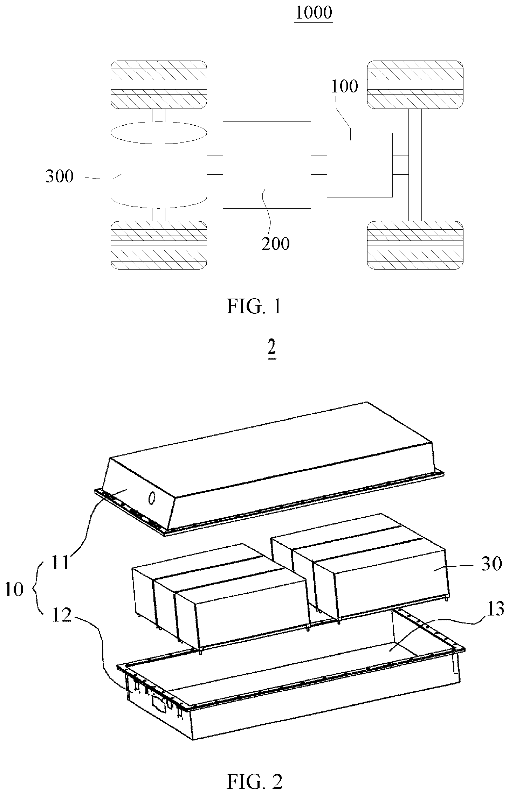

Refer to FIG. 1, which is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to meet power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

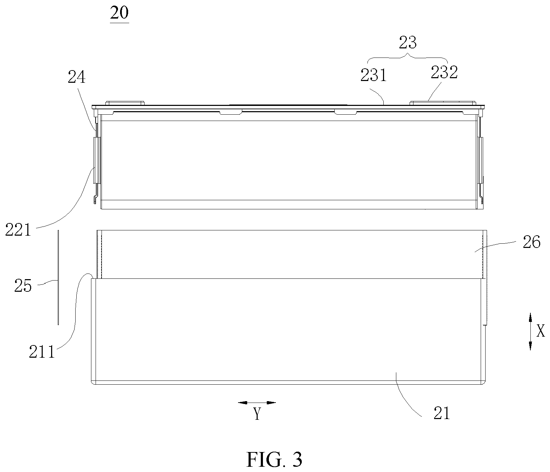

Referring to FIGs. 2 and 3, the battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define an accommodating space 13 for accommodating the battery cells 20. The second portion 12 may be a hollow structure with one end open, and the first portion 11 may be a plate structure, where the first portion 11 covers the open side of the second portion 12 for the first portion 11 and the second portion 12 to jointly define an accommodating space 13. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed by a plurality of battery cells 20 being connected in series, parallel, or series-parallel first to form a battery module, and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

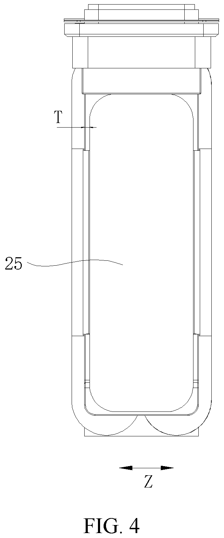

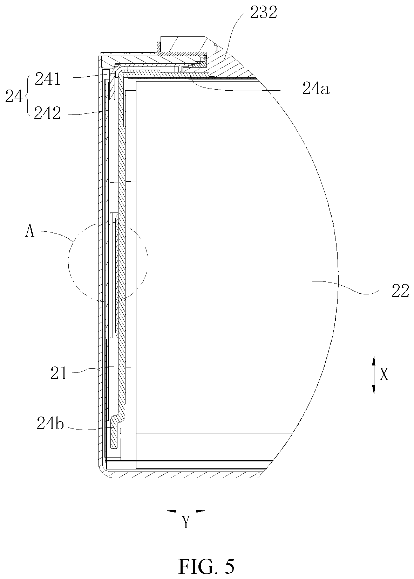

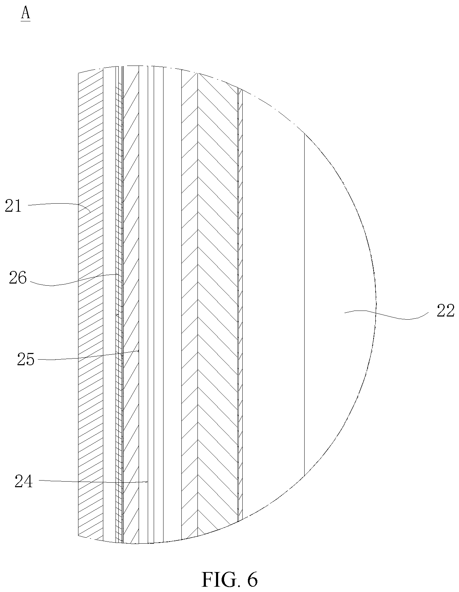

Referring to FIGs. 3 to 6, the battery cell refers to a smallest unit constituting a battery.

The battery cell 20 includes a housing 21, an electrode assembly 22, an end cover assembly 23, an adapter 24, and an insulating member 25. The housing 21 has an opening 211, the electrode assembly 22 is disposed in the housing 21, the electrode assembly 22 includes an electrode tab 221, the end cover assembly 23 closes the opening 211, and the end cover assembly 23 includes an electrode terminal 232. The adapter 24 is disposed in the housing 21 and is configured to electrically connect the electrode tab 221 and the electrode terminal 232. The insulating member 25 is disposed in the housing 21 and is configured to insulate the adapter 24 from the housing 21.

The housing 21 is an assembly configured to cooperate with the end cover assembly 23 to form an internal environment of the battery cell 20, where the formed internal environment can be used to accommodate the electrode assembly 22, an electrolyte, and other components.

Optionally, the housing 21 and the end cover assembly 23 may be separate components, an opening 211 may be provided on the housing 21, and the end cover assembly 23 covers the opening 211 to form the internal environment of the battery cell 20.

Optionally, the housing 21 may be of various shapes and sizes, such as a cuboid shape, a cylindrical shape, and a hexagonal prism shape. Specifically, a shape of the housing 21 may be determined according to a specific shape and size of the electrode assembly 22.

Optionally, the housing 21 may be made of various materials, such as copper, iron, aluminum, stainless steel, aluminum alloy, and plastic, which are not particularly limited in the embodiments of this application.

Optionally, the electrode assembly 22 is a component subjected to electrochemical reaction in the battery cell 20. The housing 21 may include one or more electrode assemblies 22. The electrode assembly 22 is mainly formed by winding or stacking a positive electrode plate and a negative electrode plate, and a separator is typically disposed between the positive electrode plate and the negative electrode plate. Parts of the positive electrode plate and the negative electrode plate that have active substances constitute a main body of the electrode assembly 22, while parts of the positive electrode plate and the negative electrode plate that have no active substances separately constitute tabs 221. A positive electrode tab and a negative electrode tab may both be located at one end of the main body or be located at two ends of the main body respectively. During charge and discharge of the battery, a positive electrode active substance and a negative electrode active substance react with an electrolyte, and the electrode tabs 221 are connected to the electrode terminals 232 to form a current loop.

Optionally, the end cover assembly 23 refers to a component that covers an opening 211 of the housing 21 to isolate an internal environment of the battery cell 20 from an external environment. A shape of the end cover assembly 23 is not limited and may be adapted to a shape of the housing 21 for fitting. Optionally, the end cover assembly 23 may be made of a material with certain hardness and strength (for example, aluminum alloy), so that the end cover assembly 23 is less likely to deform when subjected to extrusion and collision, allowing the battery cell 20 to have higher structural strength and enhanced safety performance.

Optionally, the end cover assembly 23 includes an end cover 231 and an electrode terminal 232 disposed on the end cover 231. When the battery cell 20 includes one end cover assembly 23, the end cover assembly 23 includes two electrode terminals 232. When the battery cell 20 includes two end cover assemblies 23, each end cover assembly 23 includes one electrode terminal 232, and the polarities of the electrode terminals 232 on the two end cover assemblies 23 are opposite.

Correspondingly, the housing 21 may have one, or certainly two openings 211. When there are two, the two openings 211 are opposite each other, each opening 211 can be covered with an end cover assembly 23, and each end cover assembly 23 is electrically connected to one of the electrode tabs 221.

Optionally, the adapter 24 is configured to electrically connect the electrode tab 221 of the electrode assembly 22 and the electrode terminal 232 of the end cover assembly 23, and the adapter 24 is optionally made of metal.

Optionally, the adapter 24 may include two intersecting parts, one part being electrically connected to the electrode terminal 232 and the other part being electrically connected to the electrode tab 221.

Optionally, the insulating member 25 is at least partially located between the housing 21 and the adapter 24. Optionally, the insulating member 25 at least covers the end of the adapter 24 back away from the electrode terminal 232.

Optionally, the insulating member 25 can be directly connected to the relative positions of the housing 21 and the adapter 24. The insulating member 25 may alternatively be connected to the electrode tab 221 and cover at least part of the adapter 24. Certainly, in some embodiments, when another insulating structure is provided between the housing 21 and the electrode assembly 22, the insulating member 25 may alternatively be connected to the another insulating structure.

Optionally, the insulating member may be a sheet-like or film-like structure.

An embodiment of this application provides a battery cell 20. The battery cell 20 includes a housing 21, an electrode assembly 22, an end cover assembly 23, an adapter 24, and an insulating member 25. The electrode assembly 22 is disposed in the housing 21, and the end cover assembly 23 can close the opening 211 of the housing 21. The adapter 24 is configured to electrically connect the electrode tab 221 of the electrode assembly 22 to the electrode terminal 232. Because the insulating member 25 is disposed in the housing 21 and is configured to insulate the adapter 24 from the housing 21, when thermal runaway occurs in the battery and causes the electrode assembly 22 in the battery cell 20 to swell and deform, even if the adapter 24 moves towards the side on which the housing 21 is located, the insulating member 25 can prevent the adapter 24 from electrically contacting the housing 21, thereby effectively improving the safety performance of the battery cell 20 and the battery to which the battery cell is applied.

In some optional embodiments, the housing 21 is provided with the opening 211 in a first direction X, two ends of the electrode assembly 22 in a second direction Y are each provided with the electrode tab 221, a width size of the insulating member 25 is less than a width size of the adapter 24 in a third direction Z, and the first direction X, the second direction Y, and third direction Z mutually intersect each other.

Optionally, the first direction X may be the height direction of the housing 21, the second direction Y may be the length direction of the housing 21, and the third direction Z may be the width direction of the housing 21. Optionally, the first direction X, the second direction Y, and the third direction Z may be mutually perpendicular to each other in pairs.

Optionally, the electrode assembly 22 has electrode tabs 221 at both ends in the second direction Y, and the two electrode tabs 221 are spaced apart and opposite.

Optionally, a width size of the insulating member 25 in the third direction Z is less than a size of the adapter 24.

According to the battery cell 20 provided in the embodiments of this application, the width size of the insulating member 25 is less than the width size of the adapter 24 along the third direction Z, avoiding interference with other insulating film layers during assembly after the insulating member 25 is mounted between the adapter 24 and the housing 21.

In some optional embodiments, a spacing T is present between an orthographic projection of the insulating member 25 on the adapter 24 and an edge of the adapter 24 in the third direction Z, and the spacing T is in a range of 0.5 mm-1 mm.

Optionally, the spacing T presented between the orthographic projection of the insulating member 25 on the adapter 24 and the edge of the adapter 24 in the third direction Z can be understood as the vertical distance between the orthographic projection of the insulating member 25 on the adapter 24 and two opposite edges of the adapter 24 in the third direction Z.

Optionally, the spacing T is any value in the range of 0.5 mm to 1 mm, including the end value, 0.5 mm.

Optionally, the spacing T is in the range of 0.5 mm-0.8 mm. For example, the spacing T may be 0.6 mm or 0.7 mm.

According to the battery cell 20 provided in the embodiments of this application, the spacing T is present between the orthographic projection of the insulating member 25 on the adapter 24 and the edge of the adapter 24 in the third direction Z, where the spacing T is any value in the range of 0.5 mm-1 mm. This can ensure the insulation demand between the adapter 24 and the housing 21 when thermal diffusion occurs in the battery cell 20, and can also avoid interference when the electrode assembly 22 is coated with another insulating film layer.

In some optional embodiments, a thickness of the insulating member 25 is less than or equal to 0.5 mm.

Optionally, the thickness of the insulating member 25 may be understood as the thickness of the sheet layer. Optionally, the thickness of the insulating member 25 may be understood as the thickness of the insulating member 25 in the second direction Y

Optionally, the thickness of the insulating member 25 may be equal to 0.5 mm, or it may certainly be less than 0.5 mm, for example, 0.4 mm or 0.3 mm.

According to the battery cell 20 provided in the embodiments of this application, the thickness of the insulating member 25 is less than or equal to 0.5 mm. This, on the basis of ensuring the insulation requirement of the battery cell 20, can reduce the space occupied by the insulating member 25 and increase the energy density of the battery cell 20.

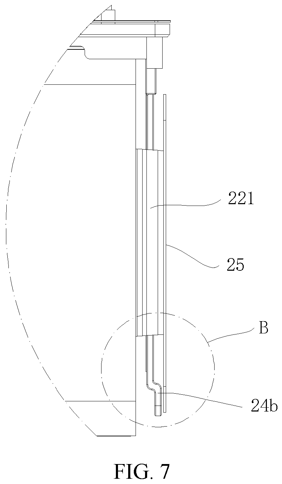

As shown in FIGs. 3 to 7, in some optional embodiments, according to the battery cell 20 provided in the embodiments of this application, the adapter 24 has a first end portion 24a and a second end portion 24b being opposite each other, the first end portion 24a is connected to the electrode terminal 232, the second end portion 24b extends beyond the electrode tab 221 in a direction back away from the end cover assembly 23, and along the second direction Y, the insulating member 25 covers the second end portion 24b.

Optionally, the adapter 24 may include a first connecting piece 241 and a second connecting piece 242 intersecting each other, and the first connecting piece 241 is stacked with and electrically connected to the electrode terminal 232. The second connecting piece 242 is stacked with and electrically connected to the electrode tab 221. The first end portion 24a may be located on the first connecting piece 241, and the second end portion 24b may be located on the second connecting piece 242.

Optionally, the second connecting piece 242 has two opposite sides in the first direction X, one side is connected to the first connecting piece 241, and the other side forms the second end portion 24b.

Optionally, that the second end portion 24b extends in a direction back away from the end cover assembly 23 and beyond the electrode tab 221 may be understood as that the second end portion 24b extends away from the end cover assembly 23 in the first direction X and beyond the electrode tab 221.

Optionally, that the insulating member 25 covers the second end portion 24b can be understood as that the insulating member 25 covers the second end portion 24b in the second direction Y

When thermal diffusion occurs in the battery cell 20, the electrode assembly 22 swells and deforms, leading to an increase in volume. Of the insulating member 25, a side on which the second end portion 24b is located cooperates with the electrode tab 221, and a side on which the first end portion 24a is located is connected to the electrode terminal 232. When the electrode assembly 22 swells and deforms, it causes the portion connected to the adapter 24 to deform. That is, the second end portion 24b first warps towards a side on which the housing 21 is located. According to the battery cell 20 provided in the embodiments of this application, the insulating member 25 covers the second end portion 24b, so that when thermal diffusion occurs in the battery cell 20, the insulating member 25 can insulate the second end portion 24b from the housing 21, thereby ensuring the safety performance of the battery cell 20.

In some optional embodiments, the insulating member 25 is stacked with the electrode tab 221 and is connected to the electrode tab 221 and the second end portion 24b.

Optionally, the electrode tab 221 may bend, and the bending portion may be stacked on the surface of the insulating member 25 facing the side wall of the housing 21.

Optionally, the insulating member 25 and the electrode tab 221 may be interconnected through adhesion or other methods.

Optionally, the insulating member 25 and the second end portion 24b may be interconnected through adhesion or other methods.

According to the battery cell 20 provided in the embodiments of this application, the insulating member 25 is stacked with the electrode tab 221 and is interconnected to the electrode tab 221 and the second end portion 24b, ensuring the mounting and fixing requirements of the insulating member 25 and allowing the second end portion 24b to be covered, thereby avoiding the risk of a short circuit caused by contact between the adapter 24 and the housing 21 during thermal diffusion of the battery cell 20.

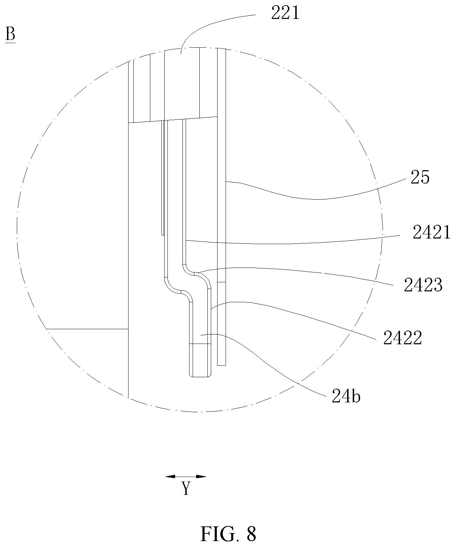

As shown in FIGs. 3 to 8, in some optional embodiments, according to the battery cell 20 provided in the embodiments of this application, along the second direction Y, the second end portion 24b bends towards a side on which a side wall of the housing 21 is located to form a step surface, and the step surface is used for supporting the insulating member 25.

Optionally, the second end portion 24b may bend towards the side on which the side wall of the housing 21 is located in the second direction Y

Optionally, the surface of the second end portion 24b facing the side wall in the first direction X may be flush with the surface of the electrode tab 221 facing the side wall in the first direction X.

Optionally, the step surface may include a first surface 2421, a second surface 2422, and a transition surface 2423 connecting the first surface 2421 and the second surface 2422. The second surface 2422 is configured to support the insulating member 25, and in the second direction Y, a vertical distance between the second surface 2422 and the side wall of the housing 21 is less than a vertical distance between the first surface 2411 and the side wall of the housing.

According to the battery cell 20 provided in the embodiments of this application, when connected to the electrode tab 221 and the second end portion 24b, the insulating member 25 can extend along a plane and does not need to extend, ensuring the requirements of connection of the insulating member 25 to the electrode tab 221 and the second end portion 24b, and optimizing the insulation effect.

The above embodiments of this application are described using an example in which the insulating member 25 is interconnected to the electrode tab 221 and the second end portion 24b. This is an optional embodiment, but not limited to the above method.

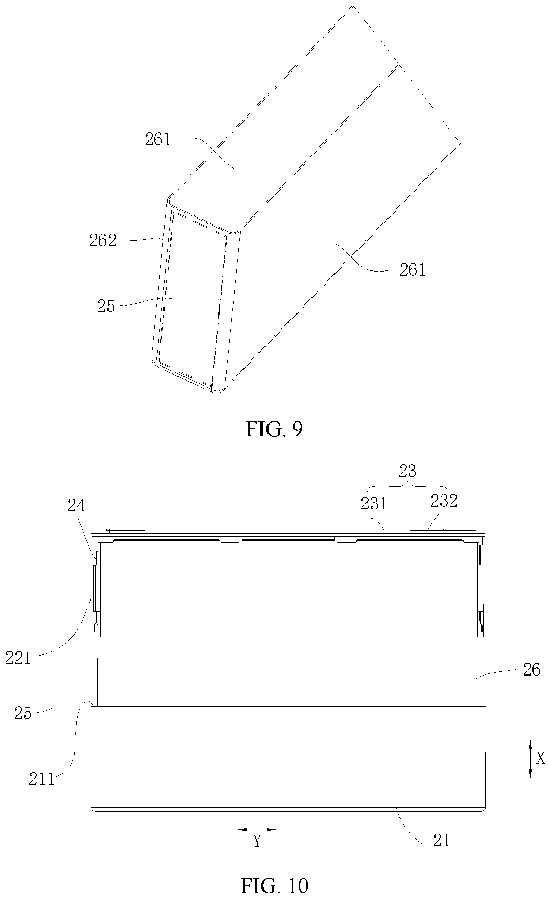

As shown in FIG. 9, in some optional embodiments, the insulating member 25 may alternatively be connected to the housing 21.

Optionally, the insulating member 25 and the housing 21 may be interconnected through adhesion or other methods.

According to the battery cell 20 provided in the embodiments of this application, as the insulating member 25 is connected to the housing 21, when thermal diffusion occurs in the battery cell 20, even if the adapter 24 moves towards the housing 21, the insulating member 25 being adhered to the housing 21 can separate and insulate the adapter 24 from the housing 21, thereby ensuring the safety performance of the battery cell 20.

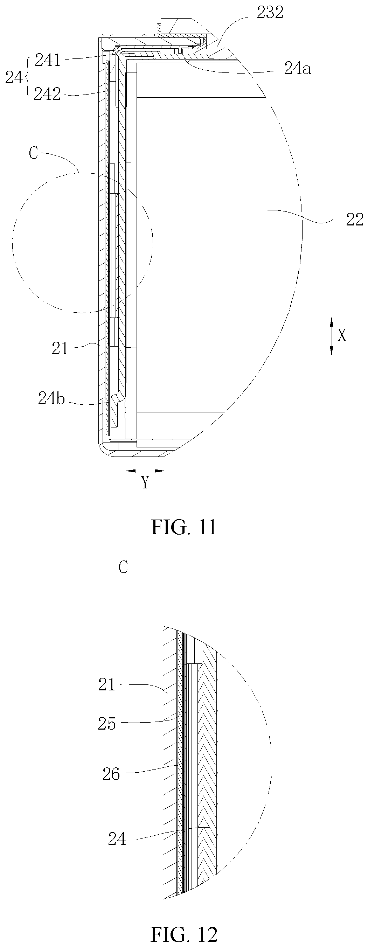

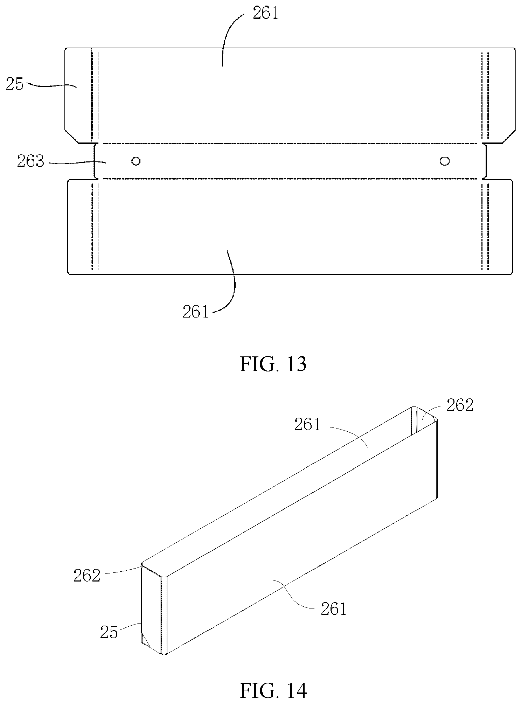

As shown in FIGs. 10 to 14, in some optional embodiments, the battery cell 20 provided in the embodiments of this application also includes a protective film 26. The protective film 26 is configured to insulate the electrode assembly 22 from the housing 21. The insulating member 25 is disposed between the protective film 26 and the housing 21 and is connected to one of the protective film 26 and the housing 21.

Optionally, the protective film 26 may be a box-like structure with an opening, and the opening of the protective film 26 is arranged on the same side as the opening 211 of the housing 21.

Optionally, the protective film 26 may be in an unfolded form or a folded form, where the protective film, when in the unfolded form, is a flat structure and when in the folded form, a box-like structure.

According to the battery cell 20 provided in the embodiments of this application, the protective film 26 is provided to insulate the entire electrode assembly 22 from the housing 21, creating double protection with the insulating member 25.

In some optional embodiments, according to the battery cell 20 provided in the embodiments of this application, the insulating member 25 is connected to the surface of the protective film 26 back away from the adapter 24.

Optionally, the electrode assembly 22 and the adapter 24 may be located in the protective film 26, and the insulating member 25 is located outside the protective film 26 and between the protective film 26 and the housing 21.

Optionally, in the first direction X, the orthographic projection of the insulating member 25 on the protective film 26 covers the orthographic projection of the second end portion 24b on the protective film 26.

Optionally, the insulating member 25 and the protective film 26 may be interconnected through adhesion or other methods.

According to the battery cell 20 provided in the embodiments of this application, the insulating member 25 is connected between the protective film 26 and the housing 21, ensuring the connection requirements between the insulating member 25 and the protective film 26. Additionally, based on the above arrangement, when the protective film 26 is damaged by the adapter 24, the insulating member 25 can provide insulation protection again, avoiding the risk of a short circuit caused by contact between the adapter 24 and the housing 21 during thermal diffusion of the battery cell 20.

In some optional embodiments, according to the battery cell 20 provided in the embodiments of this application, the protective film 26 includes a bottom surface 263, a first side wall surface 261, and a second side wall surface 262 that mutually intersect each other, an area of the first side wall surface 261 is greater than an area of the second side wall surface 262, the second side wall surface 262 faces the electrode tab 221 and the adapter 24, and the insulating member 25 is disposed on the second side wall 262 and matches the second side wall 262 in shape.

Optionally, the first side wall surfaces 261 are arranged in pairs, spaced apart and opposite in the third direction Z, and the second side wall surfaces 262 are arranged in pairs, spaced apart and opposite in the second direction Y The paired second side wall surfaces 262 are located between the paired first side wall surfaces 261. The bottom surface 263 is located at the same end of the first side wall surface 261 and the second side wall surface 262 in the first direction X and is connected to the paired first side wall surfaces 261 and the paired second side wall surfaces 262.

Optionally, the surface of the second side wall surface 262 facing the housing 21 may be adhered to the protective film 26.

Optionally, the insulating member 25 may be pre-adhered to the protective film 26 when the protective film 26 is in the unfolded form. When the protective film 26 is folded to be in the folded form, the insulating member 25 is folded along with the protective film 26 to the position opposite the adapter 24.

According to the battery cell 20 provided in the embodiments of this application, the protective film 26 is in the above form with the fitting relationship defined between the insulating member 25 and the protective film 26. This ensures the positional correspondence requirements between the insulating member 25 and the adapter 24 and allows the insulating member 25 to be connected to the protective film 26 first, facilitating the connection and shape matching therebetween and assembly in the housing 21.

In some embodiments, a melting point of the insulating member 25 is greater than or equal to a melting point of the protective film 26.

According to the battery cell 20 provided in the embodiments of this application, the melting point of the insulating member 25 is greater than the melting point of the protective film 26, the heat resistance of the insulating member 25 is better than the heat resistance of the protective film 26. When thermal diffusion in the battery cell 20 causes the protective film 26 to melt, the insulating member 25 can still provide insulation and protection, preventing the adapter 24 from contacting the housing 21.

In some optional embodiments, according to the battery cell 20 provided in the embodiments of this application, strength of the insulating member 25 is greater than or equal to strength of the protective film 26.

Optionally, the strength of the insulating member 25 is greater than or equal to the strength of the protective film 26, which can be understood as that the ability of the insulating member 25 to resist permanent deformation and fracture under external force is greater than or equal to the ability of the protective film 26 to resist permanent deformation and fracture under external force.

Optionally, the hardness of the material of the insulating member 25 may be greater than that of the protective film 26. Certainly, the thickness of the insulating member 25 may also be greater than that of the protective film 26. Such two settings can both enable the strength of the insulating member 25 to be greater than the strength of the protective film 26.

According to the battery cell 20 provided in the embodiments of this application, the strength of the insulating member 25 is greater than the strength of the protective film 26, such that when thermal diffusion in the battery cell 20 causes the electrode assembly 22 to deform, even if the adapter 24 pierces the protective film 26, the insulating member 25 can still provide protection, thereby preventing damage to the battery cell 20.

In some optional embodiments, according to the battery cell 20 provided in the embodiments of this application, the insulating member 25 is adhered to one of the protective film 26 and the housing 21.

Optionally, the insulating member 25 may be adhered to the protective film 26. Certainly, the insulating member 25 may alternatively be adhered to the housing 21.

According to the battery cell 20 provided in the embodiments of this application, the above setting is conducive to fixing the position of the insulating member 25 and can ensure stable connection between the insulating member 25 with one of the protective film 26 and the housing 21.

According to a second aspect, the embodiments of this application further provide a battery including the battery cell 20.

According to a third aspect, this application provides an electric apparatus including the foregoing battery. The electric apparatus may be any one of the foregoing devices or systems using a battery.

As shown in FIGs. 3 to 8, the battery cell 20 provided in the embodiments of this application includes a housing 21, an electrode assembly 22, an end cover assembly 23, an adapter 24, a protective film 26, and an insulating member 25. The housing 21 is a rectangular housing 21 with an opening 211 in a first direction X. The electrode assembly 22 is disposed in the housing 21 and includes two electrode tabs 221. The electrode tabs 221 are spaced apart and opposite in the second direction Y The end cover assembly 23 closes the opening 211 and includes two electrode terminals 232, one of which is a positive electrode terminal 232 and the other is a negative electrode terminal 232. The adapter 24 is disposed in the housing 21, and there are two adapters 24. Each adapter 24 is connected between one of the electrode tabs 221 and an electrode terminal 232 to electrically connect the electrode tab 221 and the electrode terminal 232. The protective film 26 is disposed between the electrode assembly 22 and the housing 21 and is configured to insulate the electrode assembly 22 from the housing 21. The insulating member 25 is disposed between the protective film 26 and the housing 21 and is connected to the protective film 26. A spacing T is present between an orthographic projection of the insulating member 25 on the adapter 24 and an edge of the adapter 24 in the third direction Z, and the spacing T is in a range of 0.5 mm-1 mm. The thickness of the insulating member 25 is less than or equal to 0.5 mm.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the implementations can be combined in any manner. This application is not limited to the specific embodiments disclosed in this specification but includes all technical solutions falling within the scope of the claims.

## Claims

1. A battery cell, comprising:
a housing having an opening;
an electrode assembly disposed in the housing, wherein the electrode assembly comprises an electrode tab;
an end cover assembly closing the opening, wherein the end cover assembly comprises an electrode terminal;
an adapter disposed in the housing and configured to electrically connect the electrode tab and the electrode terminal; and
an insulating member disposed in the housing, wherein the insulating member is configured to insulate the adapter from the housing.

2. The battery cell according to claim 1, wherein the housing is provided with the opening in a first direction, two ends of the electrode assembly in a second direction are each provided with the electrode tab, a width size of the insulating member is less than a width size of the adapter in a third direction, and the first direction, the second direction, and third direction mutually intersect each other.

3. The battery cell according to claim 2, wherein a spacing T is present between an orthographic projection of the insulating member on the adapter and an edge of the adapter in the third direction, and the spacing T is in a range of 0.5 mm-1 mm.

4. The battery cell according to any one of claims 1 to 3, wherein a thickness of the insulating member is less than or equal to 0.5 mm.

5. The battery cell according to claim 2 or 3, wherein the adapter has a first end portion and a second end portion opposite each other, the first end portion is connected to the electrode terminal, the second end portion extends beyond the electrode tab in a direction back away from the end cover assembly, and along the second direction, the insulating member covers the second end portion.

6. The battery cell according to claim 5, wherein the insulating member is stacked with the electrode tab and is connected to the electrode tab and the second end portion.

7. The battery cell according to claim 6, wherein along the second direction, the second end portion bends towards a side on which a side wall of the housing is located, to form a step surface, and the step surface is used for supporting the insulating member.

8. The battery cell according to any one of claims 1 to 5, wherein the insulating member is connected to the housing.

9. The battery cell according to any one of claims 1 to 5, wherein the battery cell further comprises a protective film, the protective film is configured to insulate the electrode assembly from the housing, and the insulating member is disposed between the protective film and the housing and is connected to one of the protective film and the housing.

10. The battery cell according to claim 9, wherein the insulating member is connected to a surface of the protective film back away from the adapter.

11. The battery cell according to claim 10, wherein the protective film comprises a bottom surface, a first side wall surface, and a second side wall surface that mutually intersect each other, an area of the first side wall surface is greater than an area of the second side wall surface, the second side wall surface faces the electrode tab and the adapter, and the insulating member is disposed on the second side wall and matches the second side wall in shape.

12. The battery cell according to any one of claims 9 to 11, wherein a melting point of the insulating member is greater than or equal to a melting point of the protective film.

13. The battery cell according to any one of claims 9 to 12, wherein strength of the insulating member is greater than or equal to strength of the protective film.

14. The battery cell according to any one of claims 9 to 13, wherein the insulating member is adhered to one of the protective film and the housing.

15. A battery, comprising the battery cell according to any one of claims 1 to 14.

16. An electric apparatus, comprising the battery according to claim 15.
